# FASCICULE DE BREVET EUROPEEN

(11) **EP 0 920 376 B1**
(45) Date de publication et mention de la délivrance du brevet: **19.01.2005**
(21) Numéro de dépôt: 98914946.3
(22) Date de dépôt: 19.03.1998
(51) Int. Cl.: B32B 17/10, B32B 31/00

(54) **PROCEDE DE FABRICATION D'UN VITRAGE EN VERRE FEUILLETE ET DISPOSITIF POUR L'EXECUTION DE CE PROCEDE**
VERFAHREN ZUR HERSTELLUNG EINER GLASVERBUNDSCHEIBE UND VORRICHTUNG ZUR DURCHFÜHRUNG VON DIESEM VERFAHREN
METHOD FOR PRODUCING A COMPOUND GLAZING SHEET AND METHOD FOR IMPLEMENTING SAME

(30) Priorité: 22.03.1997 DE 19712145
(43) Date de publication de la demande: 09.06.1999
(73) Titulaire: SAINT-GOBAIN GLASS FRANCE, 92400 Courbevoie (FR)
(72) Inventeur: BALDUIN, Michael, D-52477 Alsdorf (DE); HAVENITH, Hubert, D-52146 Würselen (DE); LABROT, Michael, D-52072 Aachen (DE)
(74) Mandataire: Muller, René
(86) Numéro de dépôt international: PCT/FR1998/000548
(87) Numéro de publication internationale: WO 1998/042504

(56) Documents cités:
- FR-A- 2 206 289
- FR-A- 2 447 807
- FR-E- 37 119
- US-A- 5 171 398
- Le grand Robert de la langue française; 2me éd.; tôme V, p. 422

## Description

La présente invention concerne un procédé de fabrication d'un vitrage en verre feuilleté comprenant au moins une couche extérieure en verre et au moins une couche intermédiaire en polymère thermoplastique, dans lequel les différentes couches sont superposées, le paquet de couches est mis sous dépression dans un récipient à vide en vue de l'extraction du gaz des espaces séparant les couches, et enfin, le paquet de couches, dont le bord est rendu étanche, est soumis à la pression atmosphérique et à une augmentation de température. L'invention concerne également un dispositif pour l'exécution du procédé suivant l'invention.

Jusqu'à présent, il est courant, pour la fabrication de verre feuilleté, de réaliser au préalable un feuilleté primaire à partir de la superposition des couches par le biais d'un calandrage ou d'un traitement sous vide afin d'extraire dans une large mesure l'air enfermé entre les couches, et de soumettre ensuite ce feuilleté primaire à une surpression élevée, comprise généralement entre 10 et 14 bars, dans un autoclave. Ces procédés dits d'autoclavage sont coûteux et fastidieux.

On connaît également les procédés de fabrication de verre feuilleté, dans lesquels un autoclavage n'est pas indispensable pour le collage final, mais ce dernier est effectué à la pression atmosphérique. Un procédé de ce type a été décrit, par exemple, dans le document DE-3 044 717 C2. Selon ce procédé connu, un cadre de caoutchouc est posé sur le bord du paquet de couches, lequel cadre est pourvu d'un canal d'aspiration continu et comprenant une conduite d'aspiration. Le paquet de couches muni de ce cadre de caoutchouc est placé dans un récipient à vide, et la conduite d'aspiration est amenée à l'extérieur à travers la paroi du récipient. Alors une dépression élevée différente est appliquée d'une part aux espaces séparant les différentes couches, par le biais de la conduite d'aspiration et du cadre en caoutchouc, et d'autre part au récipient, de telle sorte que, sous l'effet de la dépression du récipient à vide, les couches s'écartent l'une de l'autre, tandis que le gaz est extrait simultanément des espaces séparant les couches sous l'effet de la dépression transmise par le cadre en caoutchouc. Après l'extraction du gaz des espaces séparant les différentes couches, la température est augmentée et la pression dans le récipient à vide est portée à la pression atmosphérique, tandis que la pression dans le cadre en caoutchouc reste pendant ce temps à un niveau inférieur à la pression atmosphérique.

Le document DE-2 209 643 C3 décrit également un procédé pour la fabrication de verre feuilleté qui ne nécessite pas d'autoclavage et qui est approprié pour un cycle de production continu. Dans ce procédé connu également, le paquet de couches est entouré d'un cadre profilé étanche en élastomère à travers lequel l'air et le gaz présents entre les couches sont aspirés, tandis que le paquet de couches est soumis simultanément à une dépression extérieure dans un récipient à vide. Dans ce cas, le paquet de couches est chauffé simultanément à la mise en dépression et est ensuite porté à la pression atmosphérique, tout en étant encore chauffé, et collé dans cette situation.

Ces procédés connus impliquent deux systèmes de dépression distincts et nécessitent un cadre pour rendre étanche le bord du paquet de couches non seulement pendant la phase d'obtention du vide, mais également pendant la phase consécutive d'assemblage à la pression atmosphérique.

FR 2 206 289 décrit un chauffage initial et une mise sous vide simultanés, puis l'application d'une pression mécanique lorsque le verre atteint une température suffisante.

L'invention a pour but de simplifier davantage un procédé de ce genre afin de pouvoir l'intégrer mieux encore dans un processus de fabrication continu.

Suivant l'invention, ce but est atteint par le fait que le paquet de couches est tout d'abord chauffé à une température proche de la température de ramollissement du polymère thermoplastique, que l'extraction du gaz des espaces séparant les couches du paquet de couches est effectuée directement par l'effet de la dépression qui règne à l'intérieur du récipient à vide à travers les bords du paquet de couches qui ne sont pas recouverts, et que, après l'achèvement de l'extraction du gaz à l'intérieur du récipient à vide, le vide étant maintenu, un collage du bord du paquet de couches visant à le rendre étanche est effectué au moyen d'une pression mécanique exercée sur le bord du paquet de couches.

Le procédé suivant l'invention ne nécessite par conséquent ni cadre profilé étanche supplémentaire, dont la forme et la taille dépendent par ailleurs de chaque modèle de vitrage, ni moyen supplémentaire pour l'aspiration séparée à travers ces cadres profilés étanches. L'invention exploite plutôt le constat selon lequel une meilleure élimination de l'air et une meilleure extraction de gaz des espaces séparant les couches sont atteintes lorsque le paquet de couches est soumis uniquement à la dépression dans le récipient à vide sans éléments de serrage ou de retenue sur son bord. La pellicule utilisée comme couche thermoplastique intermédiaire est en effet pourvue d'une structure superficielle. Pendant le chauffage préalable du paquet de couches jusqu'à un niveau proche de la température de ramollissement de la couche thermoplastique intermédiaire, le collage complet des couches entre elles ne s'est pas encore produit en raison de sa structure superficielle, et ainsi la surface de contact entre la pellicule structurée et les couches adjacentes est suffisamment perméable pour permettre une élimination de l'air et une extraction de gaz efficaces par le seul effet de la dépression extérieure.

Etant donné d'autre part que la température du paquet de couches est déjà suffisamment élevée à ce moment pour conduire à un collage étanche avec la surface du verre sous l'effet d'une pression mécanique suffisamment forte, une bonne étanchéité est réalisée sur les bords au moyen de l'opération de pressage mécanique consécutive, qui se limite à la zone marginale immédiate des couches extérieures. La pression atmosphérique qui s'exerce ensuite sur le paquet de couches rendu ainsi étanche au niveau de ses bords a pour effet que les couches sont pressées l'une contre l'autre sur la totalité de leur surface. Ce traitement simplement suivi d'un traitement thermique supplémentaire à la pression atmosphérique, dans lequel le polymère thermoplastique de la couche intermédiaire se ramollit davantage et la transparence définitive du vitrage en verre feuilleté est atteinte par une imprégnation complète des surfaces de verre.

Selon une autre variante, l'invention n'exclut pas, après la mise sous pression atmosphérique et éventuellement le traitement thermique supplémentaire à pression atmosphérique, un passage dans un autoclavage où le feuilleté est soumis à une surpression élevée. Selon cette variante de l'invention, le temps de passage dans l'autoclave est avantageusement inférieur à celui des techniques connues.

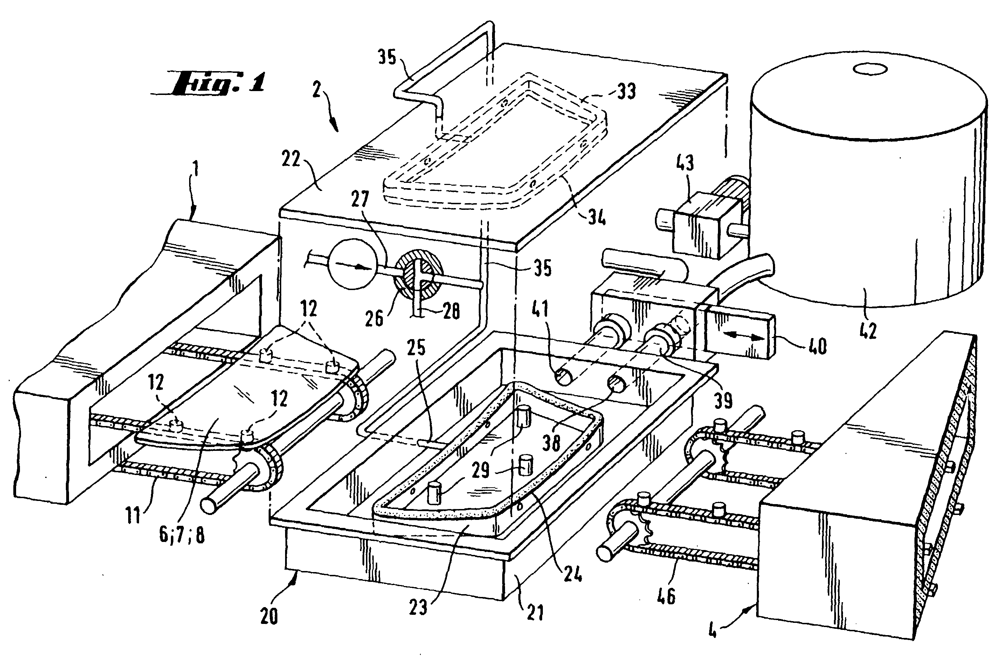

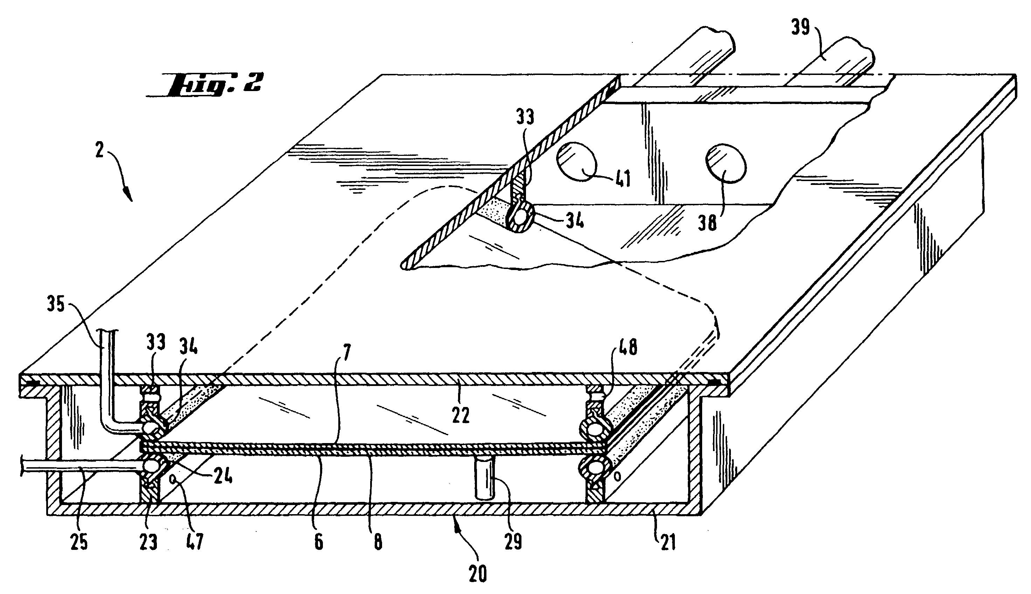

D'autres particularités et avantages de l'invention découleront des revendications dépendantes et de la description ci-après du procédé suivant l'invention et de l'appareil suivant l'invention avec référence aux dessins annexés, dans lesquels :
□ **la figure 1** montre une installation complète pour l'exécution du procédé suivant l'invention,
□ **la figure 2** est une vue partiellement arrachée et en perspective d'un récipient à vide réalisé suivant l'invention.

Comme le fait apparaître la figure 1, l'installation de fabrication de vitrages en verre feuilleté par le procédé suivant l'invention comprend un canal de préchauffage 1, un poste d'assemblage sous vide 2 et un canal de post-chauffage 4, duquel le vitrage en verre feuilleté terminé est retiré.

Le canal de préchauffage 1 a pour fonction de porter le paquet de couches constitué de couches à assembler entre elles, à la température requise pour le traitement dans le poste d'assemblage sous vide 2. Il est constitué d'un canal chauffé comprenant un transporteur à chaîne 11 muni de doigts de support 12, à l'aide duquel le paquet de couches est transporté à travers le canal chauffant. La température du paquet de couches à la sortie du canal chauffant dépend du polymère thermoplastique qui est utilisé comme couche intermédiaire pour le vitrage en verre feuilleté. En général, on utilise comme couche intermédiaire une pellicule de polybutyral de vinyle, dont la température d'assemblage se situe à environ 140°C dans le processus classique autoclavage. Les pellicules de polybutyral de vinyle de ce type sont portées à une température d'environ 100 à 120°C dans le canal de préchauffage. A cette température, les pellicules doivent déjà être suffisamment ramollies pour que, en raison de leur structure superficielle, un collage partiel intervienne de toute façon au point que les couches adhèrent l'une à l'autre, de sorte que, le cas échéant, le paquet de couches peut être soulevé du transporteur à chaîne et déplacé au moyen des ventouses qui saisissent la couche supérieure.

Le paquet de couches ainsi chauffé est ensuite amené au moyen d'un dispositif de transfert non représenté dans le poste d'assemblage sous vide 2 pour être soumis à l'opération suivante dans le récipient à vide 20. Le récipient à vide 20, dont la construction complète est illustrée en détail à la figure 2, comprend un fond 21 et un couvercle 22, qui permet la fermeture étanche au vide du récipient. A l'intérieur du fond 21, sur le fond proprement dit, sont disposés des supports 29, sur lesquels le paquet de couches est déposé. En outre, un cadre 23 présentant des perforations 47 est agencé sur le fond proprement dit, sa surface d'appui supérieure correspondant à là forme géométrique et au contour de la feuille de verre 6, qui doit être assemblée à la feuille de verre supérieure 7 du paquet de couches par l'intermédiaire de la pellicule de polyvinyle thermoplastique 8. Les perforations 47 pratiquées dans le cadre 23 garantissent que la même pression règne à l'intérieur et à l'extérieur du cadre 23 sur les bords du vitrage. Sur le cadre porteur 23 est installé un boyau 24 en élastomère, qui forme également un cadre fermé et correspondant au contour du vitrage. Le boyau 24 est raccordé à un tuyau 25 qui traverse la paroi latérale du fond 21 et mène à une vanne à trois voies 26. Par le biais de cette vanne à trois voies 26, le boyau 24 peut être raccordé soit à une conduite d'air comprimé 27, soit à une conduite de mise à l'atmosphère 28. La hauteur des supports 29 est choisie telle que, en l'absence de pression dans le boyau 24, le paquet de couches ne repose que sur lesdits supports 29, de sorte qu'aucune pression n'est exercée sur le bord du paquet de couches.

De la même manière que sur le fond 21, un cadre 33 muni de perforations 46 est également fixé au couvercle 22 du récipient à vide 20. La forme géométrique de la face inférieure de ce cadre 33 correspond également à la forme et au contour de la feuille de verre supérieure 7 du paquet de couches. Sur la surface d'appui, un boyau 34 en élastomère est également installé, qui peut être raccordé par le biais du tuyau 35 aussi bien à la conduite d'air comprimé 27 qu'à une conduite de mise à l'atmosphère.

Dans le dispositif représenté ici, sur les deux côtés du paquet de couches sont prévus des moyens de pressage pneumatiques ayant la forme de boyaux de pressage. Bien entendu, il est toutefois possible d'utiliser en remplacement des cadres de pressage rigides ou semi-rigides, qui sont pressés contre le bord du paquet de couches par un moyen mécanique ou pneumatique. De la même façon, il est possible de monter rigidement dans le dispositif, d'un côté du paquet de couches un cadre de formage, muni d'une surface d'appui à flexibilité élastique, et de ne prévoir un dispositif de pressage que de l'autre côté du paquet de couches, par exemple un boyau de refoulement agencé sur un cadre, par lequel le bord du paquet de couches est pressé contre le cadre de formage rigide.

Toutefois, le récipient à vide illustré et décrit peut également être conçu de manière que les cadres 23 et 33 ne possèdent pas de perforations, de sorte que, dès que les moyens de pressage se mettent en action et qu'une bonne étanchéité à l'égard des feuilles de verre 6 et 7 est ainsi réalisée, des espaces vides entièrement fermés et séparés l'un de l'autre apparaissent, à savoir d'une part les deux espaces vides à l'intérieur des cadres 23 et 33, et d'autre part, l'espace vide à l'extérieur des cadres 23 et 33. Si les espaces vides à l'intérieur des cadres 23 et 33 sont pourvus, suivant cette réalisation de conduites de refoulement séparées et débouchant dans une conduite commune, il est possible de soumettre à une pression différente la surface de la vitre et le bord du paquet de couches. Ceci peut comporter des avantages pour l'exécution du procédé dans certaines circonstances. Par exemple, le paquet de couches peut déjà être soumis à une surpression sur sa surface pendant que la dépression s'exerce encore sur son bord.

Le récipient à vide 20 possède un volume intérieur proportionnellement petit, de sorte que l'évacuation de l'air du récipient à vide peut être réalisée rapidement. En vue d'une évacuation rapide de l'air, le récipient est raccordé à une chambre de dépression 42 à travers l'ouverture 38, une conduite 39 et une vanne d'arrêt 40. La chambre de dépression 42 possède un volume sensiblement supérieur à celui du récipient à vide 20. Le vide est obtenu dans cette chambre au moyen de la pompe à vide 43. Lorsque le raccordement au récipient à vide 20 est réalisé au moyen de la vanne 40, un vide élevé est atteint dans celui-ci en un temps extrêmement court.

Selon une réalisation préférée de l'invention, le récipient à vide 20 comporte en outre des éléments chauffants tels que des rayonneurs infrarouges, non représentés sur les figures. Ces éléments chauffants sont avantageusement prévus pour conserver la température atteinte dans le canal de préchauffage 1, la température du paquet de couches pouvant diminuer notamment lors du transfert depuis le canal de préchauffage 1 vers le récipient à vide 20.

La chaîne de fabrication, c'est-à-dire l'ensemble de l'installation, comprend également le canal de post-chauffage 4. Le canal de post-chauffage 4, à l'instar du canal de préchauffage 1, est pourvu d'un système de transport, dans le cas représenté à nouveau un transporteur à chaîne 46, en vue de transporter les vitrages en verre feuilleté en position horizontale. Bien entendu, le canal de post-chauffage et le système de transport peuvent également être conçus de telle sorte que les vitrages en verre feuilleté puissent également être transportés à travers le canal de post-chauffage en position verticale. Le canal de post-chauffage est en outre équipé d'un système de chauffage électrique réglable, non représenté, de sorte que les vitrages en verre feuilleté peuvent être soumis à un post-traitement à une température précise dans le canal de post-chauffage.

Naturellement, la chaîne de fabrication comprend également des systèmes de transport appropriés au moyen desquels les paquets de couches sont amenés dans le canal de préchauffage 1, de celui-ci dans le récipient à vide 20, du récipient à vide 20 vers le canal de post-chauffage 4 et de la sortie du canal de post-chauffage 4 jusqu'au poste de traitement suivant.

Avec cette installation, le procédé suivant l'invention peut par exemple être mis en oeuvre de la façon suivante pour la fabrication d'un pare-brise bombé pour véhicules : les couches, au nombre par exemple de trois, destinées à composer le vitrage en verre feuilleté sont placées l'une sur l'autre pour former un paquet de couches, à savoir une feuille de verre bombée 6 d'une épaisseur de 3 mm, une feuille de polybutyral de vinyle 8 d'une épaisseur de 0,76 mm et la deuxième feuille de verre bombée 7 d'une épaisseur de 2 mm. Le paquet de couches ainsi formé est placé sur le transporteur à chaîne 11 du canal de préchauffage 1 et transporté à travers le canal de préchauffage. A l'intérieur de ce canal de préchauffage, le paquet de couches est porté à une température de 115°C.

Le paquet de couches ainsi préchauffé est ensuite placé sur les supports 29 du récipient à vide 20 ouvert. Ensuite, le récipient à vide 20 est fermé par la mise en place du couvercle 22. Dans la disposition fermée, le boyau souple 34 se trouve au-dessus du bord de la feuille de verre supérieure 7 du paquet de couches. Les deux boyaux 34 et 34 ne contiennent dans un premier temps aucune pression, de sorte que les deux feuilles de verre 6 et 7 n'entrent pas en contact avec les boyaux 24 et 34.

Dès que le récipient à vide 20 est fermé de manière étanche, on le raccorde à la chambre de dépression 42 sous vide en actionnant la vanne 40. Ainsi, une dépression inférieure à 40 mbars est atteinte dans le récipient à vide 20 en l'espace de quelques secondes. A ce niveau de dépression, l'air enfermé, le gaz enfermé et les constituants volatils de la pellicule thermoplastique sont aspirés rapidement à travers le bord du paquet de couches.

Environ 20 secondes après que le vide complet soit atteint, les deux boyaux 24 et 34 sont remplis d'air comprimé à environ 4 bars en actionnant la vanne à trois voies correspondante 26. Ainsi, le bord du paquet de couches subit sur la totalité de son périmètre un pressage uniforme tel qu'un collage étanche du paquet de couches se produit sur les bords. La pression dans les boyaux 24, 34 est maintenue durant environ 5 à 10 secondes. Ensuite, la communication avec la chambre de dépression 42 est interrompue en actionnant la vanne 40 et l'ouverture formant évent 41 du récipient à vide 20 est mise à l'atmosphère, de sorte que grâce aux perforations 47, 48 dans les cadres 23, 33, la pression atmosphérique s'exerce sur la totalité de la surface du paquet de couches. Le couvercle 22 est alors enlevé du récipient à vide. Le bord étant rendu étanche, la pression atmosphérique s'exerce à présent sur les deux faces du vitrage en verre feuilleté.

Le vitrage en verre feuilleté ainsi soumis à la pression atmosphérique est retiré du récipient à vide et placé sur le système de transport du canal de post-chauffage. Dans ce canal de post-chauffage, le vitrage est maintenu à une température d'environ 135°C pendant quelques 15 minutes. A cette température, le polybutyral de vinyle thermoplastique fond dans une mesure telle qu'il s'unit complètement aux feuilles de verre sous l'effet de la pression atmosphérique. Le vitrage en verre feuilleté rendu totalement transparent de cette manière est enlevé du système de transport 46 à l'extrémité du canal de post-chauffage 4.

Un vitrage en verre feuilleté fabriqué suivant ce procédé a été soumis aux essais habituels. Il a pleinement satisfait à toutes les exigences des essais.

## Revendications

1. Procédé de fabrication d'un vitrage en verre feuilleté comprenant au moins une couche extérieure de verre et au moins une couche intermédiaire de polymère thermoplastique, suivant lequel les différentes couches sont superposées, le paquet de couches est mis sous dépression dans un récipient à vide en vue d'extraire du gaz des espaces séparant les couches, et ensuite le paquet de couches est soumis à la pression atmosphérique, puis à une augmentation de température, **caractérisé en ce que** le paquet de couches est tout d'abord chauffé à une température proche de la température de ramollissement du polymère thermoplastique, **en ce que** l'extraction du gaz des espaces séparant les couches du paquet de couches est effectuée directement à travers les bords non recouverts du paquet de couches par le biais de la dépression régnant, à l'intérieur du récipient à vide, et **en ce que** après l'achèvement de l'extraction du gaz, un collage des bords du paquet de couches destiné à les rendre étanches est effectué à l'intérieur du récipient à vide au moyen d'une pression mécanique exercée sur le bord du paquet de couches.

2. Procédé suivant la revendication 1 , **caractérisé en ce que** dans le récipient à vide le paquet de couches est chauffé et/ ou maintenu à une température proche de la température de ramollissement du polymère thermoplastique.

3. Procédé suivant la revendication 1 ou 2, **caractérisé en ce que** l'évacuation à l'air du récipient à vide est réalisée par le biais du raccordement du récipient à vide à un récipient se trouvant en dépression élevée et dont le volume intérieur est important par rapport au volume intérieur du récipient à vide.

4. Procédé suivant l'une quelconque des revendications 1 à 3, **caractérisé en ce que** le paquet de couches est agencé en position horizontale dans le récipient à vide durant l'extraction du gaz, la feuille de verre supérieure reposant librement sur les couches inférieures.

5. Procédé suivant l'une des revendications 1 à 4, **caractérisé en ce que** le paquet de couches est enlevé du récipient à vide après la mise à l'atmosphère du récipient à vide et est soumis, dans un canal de post-chauffage, à un traitement thermique supplémentaire à une température proche de la température de fusion du polymère thermoplastique.

6. Dispositif pour l'exécution du procédé suivant la revendication 1, **caractérisé en ce qu'**il comprend un canal de préchauffage (1), un canal de post-chauffage (4) et un récipient à vide (20) constitué d'un fond (22) supportant un paquet de couches (6, 7, 8) et d'un couvercle (22), **en ce que** sont installés, dans le fond (21) un cadre (23) correspondant au contour et à la forme de la feuille de verre inférieure (6), et dans le couvercle (22), un cadre (33) correspondant également au contour et à la forme de la feuille de verre supérieure (8), et **en ce que** des moyens de pressage sont raccordés au cadre (23) et/ou au cadre (33), à l'aide desquels une pression mécanique peut être exercée sur le bord du paquet de couches après l'évacuation de l'air du récipient à vide (20).

7. Dispositif suivant la revendication 6, **caractérisé en ce que** les moyens de pressage raccordés au cadre (23) et/ou au cadre (33) sont constitués de boyaux de refoulement (24, 34) en élastomère susceptibles d'être raccordés à une conduite d'air comprimé (27).

8. Dispositif suivant la revendication 6 ou 7, **caractérisé en ce que** le récipient à vide (20) peut être raccordé à une chambre de dépression (42) de volume intérieur important par rapport au volume intérieur du récipient à vide (20).

## Claims

1. Method of manufacturing a glazing pane made of laminated glass comprising at least one outer layer of glass and at least one intermediate layer of thermoplastic polymer, according to which the different layers are superposed, the package of layers is put under low pressure in a vacuum vessel with a view to extracting gas from the spaces separating the layers, and next the package of layers is subjected to atmospheric pressure, and then to an increase in temperature, **characterised in that** the package of layers is first of all heated to a temperature close to the softening temperature of the thermoplastic polymer, **in that** the extraction of the gas from the spaces separating the layers of the package of layers is performed directly through the non-covered edges of the package of layers by means of the low pressure prevailing inside the vacuum vessel, and **in that**, after the extraction of the gas is complete, bonding of the edges of the package of layers intended to make them leakproof is performed inside the vacuum vessel by means of a mechanical pressure exerted on the edge of the package of layers.

2. Method according to Claim 1, **characterised in that**, in the vacuum vessel, the package of layers is heated to and/or maintained at a temperature close to the softening temperature of the thermoplastic polymer.

3. Method according to Claim 1 or 2, **characterised in that** the evacuation of air from the vacuum vessel is carried out by means of connection of the vacuum vessel to a vessel at very low pressure and whose internal volume is large compared with the internal volume of the vacuum vessel.

4. Method according to any one of Claims 1 to 3, **characterised in that** the package of layers is arranged in a horizontal position in the vacuum vessel during the extraction of the gas, the upper sheet of glass resting freely on the lower layers.

5. Method according to one of Claims 1 to 4, **characterised in that** the package of layers is removed from the vacuum vessel after connection of the vacuum vessel to the atmosphere and is subjected, in a post-heating channel, to an additional heat treatment at a temperature close to the melting temperature of the thermoplastic polymer.

6. Device for implementing the method according to Claim 1, **characterised in that** it comprises a preheating channel (1), a post-heating channel (4) and a vacuum vessel (20) consisting of a bottom (21) supporting a package of layers (6, 7, 8) and a cover (22), **in that** there are installed, in the bottom (21), a frame (23) corresponding to the outline and shape of the lower sheet of glass (6), and in the cover (22), a frame (33) also corresponding to the outline and shape of the upper sheet of glass (8), and **in that** pressing means are connected to the frame (23) and/or to the frame (33), by means of which a mechanical pressure can be exerted on the edge of the package of layers after the evacuation of the air from the vacuum vessel (20).

7. Device according to Claim 6, **characterised in that** the pressing means connected to the frame (23) and/or to the frame (33) consist of elastomer compressing tubes (24, 34) capable of being connected to a compressed air duct (27).

8. Device according to Claim 6 or 7, **characterised in that** the vacuum vessel (20) can be connected to a low-pressure chamber (42) with a large internal volume compared with the internal volume of the vacuum vessel (20).

## Patentansprüche

1. Verfahren zur Herstellung einer Verbundglasscheibe mit wenigstens einer Außenschicht aus Glas und wenigstens einer Zwischenschicht aus einem thermoplastischen Polymer, bei dem die einzelnen Schichten aufeinandergelegt, das Schichtenpaket in einem Vakuumbehälter zur Entgasung der Zwischenräume zwischen den Schichten unter Unterdruck gesetzt und anschließend das Schichtenpaket atmosphärischem Druck und dann erhöhter Temperatur ausgesetzt wird,
**dadurch gekennzeichnet, dass** das Schichtenpaket zunächst bis in die Nähe der Erweichungstemperatur des thermoplastischen Polymers erwärmt wird, dass die Entgasung der Zwischenräume zwischen den Schichten des Schichtenpakets unmittelbar durch den innerhalb des Vakuumbehälters herrschenden Unterdruck über die nicht abgedeckten Ränder des Schichtenpakets erfolgt, und dass nach erfolgter Entgasung innerhalb des Vakuumbehälters durch auf den Rand des Schichtenpakets ausgeübten mechanischen Druck eine dessen Abdichten bezweckende Verklebung des Randes des Schichtenpakets durchgeführt wird.

2. Verfahren nach Anspruch 1, **dadurch gekennzeichnet, dass** das Schichtenpaket in dem Vakuumbehälter auf eine Temperatur nahe der Erweichungstemperatur des thermoplastischen Polymers erwärmt oder gehalten wird.

3. Verfahren nach Anspruch 1 oder 2, **dadurch gekennzeichnet, dass** die Evakuierung der Luft aus dem Vakuumbehälter durch Verbindung des Vakuumbehälters mit einem unter hohem Unterdruck stehenden Behälter mit im Vergleich zum Innenvolumen des Vakuumbehälters großem Innenvolumen erfolgt.

4. Verfahren nach einem der Ansprüche 1 bis 3, **dadurch gekennzeichnet, dass** das Schichtenpaket in dem Vakuumbehälter während der Entgasung in horizontaler Anordnung gelagert ist, wobei die obere Glasscheibe frei auf den unteren Schichten aufliegt.

5. Verfahren nach einem der Ansprüche 1 bis 4, **dadurch gekennzeichnet, dass** das Schichtenpaket nach der Belüftung des Vakuumbehälters dem Vakuumbehälter entnommen und in einem Nachheizkanal einer weiteren Wärmebehandlung bei einer Temperatur nahe der Schmelztemperatur des thermoplastischen Polymers unterzogen wird.

6. Vorrichtung zur Durchführung des Verfahrens nach Anspruch 1 **dadurch gekennzeichnet, dass** sie einen Vorwärmkanal (1), einen Nachheizkanal (4) und einen Vakuumbehälter (20) mit einem ein Schichtenpaket (6,7,8) aufnehmenden Bodenteil (21) und einem Deckel (22) umfasst, dass im Bodenteil (21) ein der Kontur und der Form der unteren Glasscheibe (6) entsprechender Rahmen (23), und am Deckel (22) ein ebenfalls der Kontur und der Form der oberen Glasscheibe (8) entsprechender Rahmen (33) angeordnet ist, und dass mit dem Rahmen (23) und/oder mit dem Rahmen (33) Druckmittel verbunden sind, durch die nach Evakuierung des Vakuumbehälters (20) ein mechanischer Druck auf den Rand des Schichtenpakets ausgeübt werden kann.

7. Vorrichtung nach Anspruch 6, **dadurch gekennzeichnet, dass** die mit dem Rahmen (23) und/oder mit dem Rahmen (33) verbundenen Druckmittel aus mit einer Druckluftleitung (27) verbindbaren Druckschläuchen (24, 34) aus einem Elastomer bestehen.

8. Vorrichtung nach Anspruch 6 oder 7, **dadurch gekennzeichnet, dass** der Vakuumbehälter (20) mit einer Unterdruckkammer (42) mit einem im Vergleich zum Innenvolumen des Vakuumbehälters (20) großen Innenvolumen verbindbar ist.
